# EUROPEAN PATENT SPECIFICATION

(11) **EP 3 380 299 B1**
(45) Date of publication and mention of the grant of the patent: **25.12.2019**
(21) Application number: 16791620.4
(22) Date of filing: 08.11.2016
(51) Int. Cl.: B29C 49/00, C08F 2/00, C08L 23/08, C08J 5/18, B29C 48/30, B29C 48/92, B29C 48/08, B29C 48/10, B29C 48/32

(54) **POLYOLEFIN COMPOSITIONS AND ARTICLES MANUFACTURED THEREFROM**
POLYOLEFINZUSAMMENSETZUNGEN UND DARAUS HERGESTELLTE ARTIKEL
COMPOSITIONS DE POLYOLÉFINES ET ARTICLES FABRIQUÉS À PARTIR DE CELLES-CI

(30) Priority: 24.11.2015 EP 15195965
(43) Date of publication of application: 03.10.2018
(73) Proprietor: Basell Polyolefine GmbH, 50389 Wesseling (DE)
(72) Inventor: CAVALIERI, Claudio, 44122 Ferrara (IT); GRAZZI, Michele, 44122 Ferrara (IT)
(74) Representative: Gaverini, Gaetano Luigi Attilio
(86) International application number: PCT/EP2016/077019
(87) International publication number: WO 2017/089125

(56) References cited:
- EP-A1- 2 743 307
- WO-A1-2015/055433
- WO-A1-2015/180919
- US-A1- 2014 045 998

## Description

### FIELD OF THE INVENTION

The present disclosure provides a polyolefin composition comprising a polyethylene having a density of 0.920-0.940 g/cm³ and an ethylene copolymer. The polyolefin composition can be used to manufacture sheets, particularly geomembranes.

### BACKGROUND OF THE INVENTION

Polymer materials for geomembranes are selected for their overall performance in key areas of chemical resistance, mechanical properties (elastic modulus, yield strength, puncture/tear resistance), weathering resistance, product life expectancy, installation factors and cost effectiveness. The properties of polymeric geomembranes are determined mainly by their polymer structure, molecular weight and crystallinity. The degree of crystallinity has a pronounced effect on the performance properties of the geomembrane, including the mechanical properties and chemical resistance.

Medium density polyethylene ("MDPE") and high density polyethylene ("HDPE") have been used in polyolefin-based geomembrane applications. The highly crystalline nature of these polymers is responsible for high/medium density and stiffness, as well as for low permeability and high chemical resistance. MDPE and HDPE are relatively low cost polymers, have good physical property balances, chemical resistance, and ultraviolet weathering performance. Also, MDPE and HDPE are easily processed in blown and flat die extrusion processes.

Geomembranes made with MDPE or HDPE tend to lack flexibility and impact resistance, especially in cold climate or cold environment applications. It may be desirable to improve various properties of MDPE or HDPE including flexibility, impact resistance, dimensional stability, environmental stress cracking resistance (ESCR), and temperature resistance.

WO 2014/025982 describes a thermoplastic polyolefin composition comprising; a) MDPE or HDPE; and b) a flexible elastoplastic polymer composition comprising a copolymer of propylene with a minor amount of ethylene and an olefin copolymer comprising ethylene, propylene and optionally a diene.

Although several mechanical properties are improved when compared to MDPE and HDPE, the thermoplastic polyolefin composition of WO 2014/025982 has relatively too high flexural modulus and relatively too low tensile properties to be suitable for certain applications in the field of geomembranes

There is a need, therefore, for an improved and cost-effective polyolefin composition particularly suitable to manufacture geomembranes.

### SUMMARY OF THE INVENTION

The present disclosure provides a polyolefin composition comprising:
A) from 60 to 75 weight percent ("wt.%") of a polyethylene having a density of 0.920-0.940 g/cm³ and a fraction soluble in xylene (XS_{A}) of less than 10 wt.%, said polyethylene comprising ethylene and one or more comonomers selected from α-olefins having formula CH₂=CHR, wherein R is an alkyl radical, linear or branched, having from 1 to 10 carbon atoms; and
B) from 25 to 40 wt.% of a copolymer of ethylene with one or more comonomers selected from α-olefins having formula HC₂=CHR^{I}, where R^{I} is an alkyl radical, linear or branched, having from 1 to 8 carbon atoms, comprising from 50 to 70 wt.% of ethylene and having a fraction soluble in xylene (XS_{B}) of at least 50 wt.%,
   the composition having a flexural modulus of less than 260 MPa as measured according to ISO 178.

Component B) is more soluble in xylene, thus less crystalline, than component A).

The composition may useful to manufacture articles such as sheets, geomembranes, roofing membranes, soft skins, drawn tapes, drawn fibers, and drawn filaments. It is particularly useful to manufacture geomembranes.

### DETAILED DESCRIPTION OF THE INVENTION

Definitions and test methods.

In the present description, "room temperature" means a temperature of about 25°C.

Solubility in xylene (XS) was determined by the following procedure: 2.5 g of polymer and 250 ml of xylene were introduced in a glass flask equipped with a refrigerator and a magnetic stirrer. The temperature was raised in 30 minutes up to the boiling point of the solvent. The so obtained clear solution was kept under reflux and stirring for further 30 minutes. The closed flask was then left to reach 100°C (heating switched off) and then it was placed in a thermostatic water bath at 25°C for 30 minutes. The solid formed was filtered on quick filtering paper. 100 ml of the filtered liquid was poured in a previously weighed aluminium container, which was heated on a heating plate under nitrogen flow to remove the solvent by evaporation. The container was then kept in an oven at 80°C under vacuum until constant weight was obtained. The weight percentage of polymer soluble in xylene at room temperature was then calculated.

Density was determined according to ISO 1183 at 23°C.

Shore D were determined according to ISO 868.

Melt Flow Rate (MFR) was determined according to ISO 1133 at 230°C with a load of 2.16 kg.

Melting temperature was determined by differential scanning calorimetry (DSC) according to ISO 11357-3. A sample weighting 6 ± 1 mg was heated to 200 ± 1° C at a rate of 20 °C/min and kept at 200 ± 1° C for 2 minutes in nitrogen stream and was then cooled at a rate of 20° C/min to 40 ± 2° C, thereby kept at this temperature for 2 min to crystallize the sample. Then, the sample was again melted at a temperature rise rate of 20° C/min up to 200° C ± 1. The melting scan was recorded, a thermogram was obtained, and, from this, temperatures corresponding to peaks were read. The temperature corresponding to the most intense melting peak recorded during the second fusion was taken as the melting temperature.

Intrinsic Viscosity (I.V.) was determined in tetrahydronaphthalene at 135°C. The sample was dissolved in tetrahydronaphthalene at 135 °C, then was poured into the capillary viscometer. The viscometer tube (Ubbelohde type) was surrounded by a cylindrical glass jacket; this setup allowed a temperature control with a circulating thermostated liquid. The downward passage of the meniscus was timed by a photoelectric device. The passage of the meniscus in front of the upper lamp started the counter which had a quartz crystal oscillator. The meniscus stopped the counter as it passed the lower lamp and the efflux time was registered. This efflux time was converted into a value of intrinsic viscosity through Huggins' equation (Huggins, M.L., J. Am. Chem. Soc., 1942, 64, 2716) by knowing the flow time of the pure solvent at the same experimental conditions (same viscometer and same temperature). One single polymer solution was used to determine the I.V. [η].

Propylene and butene-1 contents were determined by IR spectroscopy.
The following measurements were used to calculate the propylene content:
a) Area (ANIR) of the combination absorption bands between 4482 and 3950 cm⁻¹ which was used for spectrometric normalization of sample thickness.
b) Area (A971) of the absorption band due to propylene sequences in the range 986-952 cm⁻¹, omitting area beneath a baseline drawn between the endpoints.
The ratio A971/ANIR was calibrated by analyzing copolymers of known compositions, determined by NMR spectroscopy.

The following measurements were used to calculate the 1-butene content:

Area (ANIR) of the combination absorption bands between 4482 and 3950 cm⁻¹ which was used for spectrometric normalization of sample thickness.

Area (Ac4) of the absorption band due to ethyl branches from 1-butene propylene sequences in the range 781-750 cm⁻¹, omitting the area beneath a baseline drawn between the endpoints.

The ratio Ac4/ANIR was calibrated by analyzing copolymers of known compositions, determined by NMR spectroscopy.

Flexural Modulus: ISO 178, measured on 4 mm compression molded sheets 24 hours after molding. Compression molded specimens were prepared according to ISO 293 and ISO 1872-2.

### Measurements on injection molded specimens

Tensile strength and elongation at yield: (ISO 527-3; 50 mm/min), measured on 4 mm injection molded specimens 24 hours after injection.

Tensile strength at and elongation at break: (ISO 527-3; 50 mm/min), measured on 4 mm injection molded specimens 24 hours after injection.

Softening Vicat temperature: (ISO 306) measured on 4 mm injection molded specimens 24 hours after injection.

H.D.T. at 0.455 MPa load: (ISO 75) measured on 4 mm injection molded specimens 24 hours after injection.

### Measurements on extruded specimens

Tensile strength and elongation at yield: (ISO 527-3; 500 mm/min), measured on 1 mm extruded sheets 48 hours after extrusion.

Tensile strength at and elongation at break: (ISO 527-3; 500 mm/min), measured on 1 mm extruded sheets 48 hours after extrusion.

The sheets specimens were die cut from 1 mm thick sheets which were extruded using a laboratory sized Brabender 30mm extruder (30 L/D). The extruder temperature profile was set in order to have a melt temperature of 260-270°C while total polymer output during the tests was at 5 kg/h.

The polyethylene component A), having a density of 0.920-0.940 g/cm³, is a copolymer of ethylene with one or more comonomers selected from α-olefins having formula CH₂=CHR, wherein R is an alkyl radical, linear or branched, having from 1 to 10 carbon atoms. Examples of said α-olefins are propylene, butene-1, pentene-1, 4-methylpentene-1, hexene-1, octene-1 and decene-1.

In an embodiment, the present polyolefin composition comprises from 60 to 70 wt.% of component A), and from 30 to 40 wt.% of component B).

The total amount of α-olefin comonomer in polyethylene A) is from 4 to 15 wt.%; alternatively from 6 to 12 wt.%.

The α-olefin comonomer in polyethylene A) may be propylene or butene-1 or a mixture of propylene and butene-1.

In an embodiment the polyethylene A) comprises from 2 to 5 wt.% of propylene and from 4 to 7 wt.% of butene-1.

The polyethylene component A) has a solubility in xylene (XS_{A}) at 25°C of less than 10 wt.%, alternatively of less than 8 wt.%, in particular from less than 10 to 1 wt.% or from less than 8 to 1 wt.%.

The ethylene copolymer of component B) is a copolymer of ethylene with one or more comonomers selected from α-olefins having formula HC₂=CHR^{I}, where R^{I} is an alkyl radical, linear or branched, having from 1 to 8 carbon atoms.

Examples of said α-olefins are propylene, butene-1, pentene-1, 4-methylpentene-1, hexene-1, octene-1 and decene-1.

In an embodiment, the ethylene copolymer of component B) is a copolymer of ethylene with propylene, in particular it may comprise from 35 to 45 wt.% of propylene and from 55 to 75 wt.% of ethylene.

The ethylene copolymer of component B) has a fraction soluble in xylene (XS_{B}) of at least 50 wt.%, in particular from 50 to 95 wt.% or from 70 to 95 wt.%.

In an embodiment, the intrinsic viscosity [η] of the XS_{B} fraction is of 2 dl/g or more, in particular from 2 to 3.5 dl/g.

The present polyolefin composition may have a melting peak at a temperature Tm of 120°C or higher, in particular from 120°C to 130°C, measured by Differential Scanning Calorimetry with a heating rate of 20°C per minute.

The melt flow rate (MFR) of the polyolefin composition may be from 0.3 to 5 g/10 min., alternatively from 0.5 to 3 g/10 min., determined according to ISO 1133 at 230°C with a load of 2.16 kg.

In various embodiments, the present polyolefin composition may have at least one of the following additional features:
- a MFR value of the polyethylene component A), determined according to ISO 1133 at 230°C with a load of 2.16 kg, of from 1 to 15 g/10 min.;
- an ethylene content, determined on the total amount of A) + B), of 70 - 95% by weight, alternatively of 75 - 90% by weight;
- an amount of total fraction XS_{TOT} soluble in xylene at 25°C, determined by extraction carried out on the total amount of A) + B), of 20% - 50% by weight, alternatively of 30 - 40% by weight;
- an intrinsic viscosity [η] of the XS_{TOT} fraction of 1.8 dl/g or more, in particular from 1.8 to 3.0 dl/g;
- a flexural modulus value from 90 to less than 260 MPa, or from 90 to 230 MPa.

In various embodiments, the present polyolefin composition may be prepared by a sequential polymerization process, comprising at least two sequential steps, wherein components A) and B) are prepared in separate subsequent steps, by operating in each step, except the first step, in the presence of the polymer formed and the catalyst used in the preceding step. The catalyst is added only in the first step, but its activity is such that it is still active for all the subsequent steps.

The polymerization process, which can be continuous or batch-type, is carried out following known techniques and operating in the liquid phase, in the presence or not of inert diluent, or in the gas phase, or by mixed liquid-gas techniques. It is preferable to carry out the polymerization in the gas phase.

The polymerization temperature may be from 50 to 100 °C. The pressure may be atmospheric or higher.

The regulation of the molecular weight is carried out by using known regulators, hydrogen in particular.

The polymerization may be carried out in the presence of a Ziegler-Natta catalyst. Typically, a Ziegler-Natta catalyst comprises the product of the reaction of an organometallic compound of Group 1, 2 or 13 of the Periodic Table of Elements with a transition metal compound of Groups 4 to 10 of the Periodic Table of Elements (new notation). In particular, the transition metal compound is selected among the compounds of Ti, V, Zr, Cr and Hf, and is preferably supported on active MgCl₂.

Particularly, preferred catalysts comprise the product of the reaction of said organometallic compound of Group 1, 2 or 13 of the Periodic Table of Elements, with a solid catalyst component comprising a Ti compound and an electron donor compound supported on active MgCl₂.

Preferred organometallic compounds are the aluminum alkyl compounds.

Thus in an embodiment, the polyolefin composition of the present invention is obtainable by using a Ziegler-Natta catalyst, preferably a Ziegler-Natta catalyst supported on active MgCl₂, more preferably a Ziegler-Natta catalyst comprising the product of reaction of:
1) a solid catalyst component comprising a Ti compound and an electron donor (internal electron-donor) supported on active MgCl₂;
2) an aluminum alkyl compound (cocatalyst); and, optionally,
3) an electron-donor compound (external electron-donor).

The solid catalyst component (1) contains as electron-donor a compound generally selected among the ethers, ketones, lactones, compounds containing N, P and/or S atoms, and mono- and dicarboxylic acid esters.

Catalysts having the above mentioned characteristics are well known in the patent literature; particularly advantageous are the catalysts described in US patent 4,399,054 and European patent 45977.

The electron-donor compounds may be phthalic acid esters, in particular diisobutyl phthalate, and succinic acid esters.

Employable succinic acid esters are represented by the formula (I): 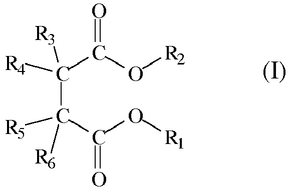 wherein the radicals R₁ and R₂, equal to or different from each other, are a C₁-C₂₀ linear or branched alkyl, alkenyl, cycloalkyl, aryl, arylalkyl or alkylaryl group, optionally containing heteroatoms; the radicals R₃ to R₆ equal to or different from each other, are hydrogen or a C₁-C₂₀ linear or branched alkyl, alkenyl, cycloalkyl, aryl, arylalkyl or alkylaryl group, optionally containing heteroatoms, and the radicals R₃ to R₆ which are joined to the same carbon atom can be linked together to form a cycle.

R₁ and R₂ are preferably C₁-C₈ alkyl, cycloalkyl, aryl, arylalkyl and alkylaryl groups. Particularly preferred are the compounds in which R₁ and R₂ are selected from primary alkyls and in particular branched primary alkyls. Examples of suitable R₁ and R₂ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which R₃ to R₅ are hydrogen and R₆ is a branched alkyl, cycloalkyl, aryl, arylalkyl and alkylaryl radical having from 3 to 10 carbon atoms. Another preferred group of compounds within those of formula (I) is that in which at least two radicals from R₃ to R₆ are different from hydrogen and are selected from C₁-C₂₀ linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is R₃ and R₅ or R₄ and R₆ are particularly preferred.

Other electron-donors may be the 1,3-diethers, as disclosed in applications EP 0 361 493 B1 and EP 0 728 769 B1.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical).

Examples of the said silicon compounds are those of formula R¹ₐR²_{b}Si(OR³)_{c}, where a and b are integer numbers from 0 to 2, c is an integer from 1 to 3 and the sum (a+b+c) is 4; R¹, R² and R³ are alkyl, cycloalkyl or aryl radicals with 1-18 carbon atoms optionally containing heteroatoms.

Specific examples of silicon compounds are (tert-butyl)₂Si(OCH₃)₂, (cyclohexyl)(methyl)Si (OCH₃)₂, (phenyl)₂Si(OCH₃)₂ and (cyclopentyl)₂Si(OCH₃)₂.

The previously said 1,3- diethers may be used as external donors. In the case that the internal donor is one of the said 1,3-diethers, the external donor can be omitted.

The catalysts may be precontacted with small quantities of olefin (prepolymerization) by maintaining the catalyst in suspension in a hydrocarbon solvent, and by polymerizing at temperatures from room temperature to 60°C, thus producing a quantity of polymer from 0.5 to 3 times the weight of the catalyst.

The precontact step can also take place in liquid monomer, producing, in this case, a quantity of polymer up to 1000 times the weight of the catalyst.

The present polyolefin composition can also contain additives commonly employed in the art, such as antioxidants, light stabilizers, heat stabilizers, colorants and fillers.

The present polyolefin composition can be compounded with other polyolefins, in particular propylene polymers such as propylene homopolymers, random copolymers, and thermoplastic elastomeric polyolefin compositions.

Accordingly, another embodiment relates to a polyolefin composition - designated also as "second polyolefin composition" - containing the above-defined polyolefin composition, designated as "first polyolefin composition".

The second polyolefin composition may comprise at least 50% by weight, in particular from 50% to 85% by weight, of one or more additional polyolefins, thus the second polyolefin composition contains 50% or less, in particular from 15% to 50% by weight, of the first polyolefin composition, all percent amounts being referred to the total weight of the first polyolefin composition and of the additional polyolefin or polyolefins.

Practical examples of said additional polyolefins are the following polymers:
1. crystalline propylene homopolymers, in particular isotactic or mainly isotactic homopolymers;
2. crystalline propylene copolymers with ethylene and/or a C₄-C₁₀ α-olefin, wherein the total comonomer content ranges from 0.05 to 20% by weight with respect to the weight of the copolymer, and wherein preferred C₄-C₁₀ α-olefins are 1-butene; 1-hexene; 4-methyl-1-pentene and 1-octene;
3. crystalline ethylene homopolymers and copolymers with propylene and/or a C₄-C₁₀ α-olefin, such as HDPE;
4. thermoplastic elastomeric compositions comprising one or more of propylene homopolymers and/or the copolymers of item 2) and an elastomeric moiety comprising one or more copolymers of ethylene with propylene and/or C₄-C₁₀ α-olefins, optionally containing minor quantities of a diene, such as butadiene, 1,4-hexadiene, 1,5-hexadiene and ethylidene-1-norbornene, wherein the diene content may be from 1 to 10% by weight, typically prepared according to known methods by mixing the components in the molten state or by sequential polymerization, and generally containing the said elastomeric moiety in quantities from 5 to 80% by weight.

The second polyolefin composition may be manufactured by mixing the first polyolefin composition and the additional polyolefin(s) together, extruding the mixture, and pelletizing the resulting composition using known techniques and apparatus.

The second polyolefin composition may also contain conventional additives such as mineral fillers, colorants and stabilizers. Mineral fillers that can be included in the composition include talc, CaCO₃, silica, wollastonite (CaSiO₃), clays, diatomaceaous earth, titanium oxide and zeolites. The mineral filler may have an average particle diameter ranging from 0.1 to 5 micrometers. Such additives may be present in an amount of 5 to 30 wt.% of the amount of the second polyolefin composition.

The present disclosure relates also to articles manufactured by using the polyolefin compositions described above, in particular geomembranes. Geomembranes may be used in a variety of applications and are alternatively used to line landfill sites to prevent the passage of contaminants in the landfill site through to the ground water. In various embodiments, geomembranes may be used to provide an impermeable barrier for the containment of water reservoirs. In alternative embodiments, geomembranes may be used to contain a reservoir of salt water. The water from the salt water may be permitted to evaporate and the salt may remain contained by the geomembrane. Thus in some embodiments geomembranes are used in processes to separate salt from salt water (and conversely water from salt water).

Polymeric geomembranes can be manufactured by a number of different methods and the nature of the specific manufacturing method can impart various characteristics to the final product. When using the present polyolefin composition, an extrusion method may be used. Extrusion methods include blown extrusion, cast extrusion and extrusion coating.

Polyolefin geomembranes may be manufactured by an extrusion method where the polyolefin composition in pelletized form is mixed with a pelletized concentrate or masterbatch. The masterbatch may comprise additive formulants such as carbon black (or titanium dioxide in the case of white membranes), antioxidants and stabilizers. The mixture is then fed to an extruder where the materials are heated, intimately mixed and sheared using a tapered flighted screw. The melt is mixed to ensure homogeneous distribution and dispersion of the additives. The melt is then forced through a die - either a flat die (in the cast sheet extrusion method) or an annular die (in the blown bubble method, in which a thin sheet of around 1 to 2.5 mm thickness is produced).

Flat-die geomembrane manufacturing delivers greater thickness and gauge control than round die blown bubble. Blown bubble on the other hand may provide good tear resistance.

### EXAMPLES

The various embodiments, compositions and methods as provided herein are disclosed further below in the following examples. These Examples are illustrative only, and are not intended to limit the scope of the appended claims in any manner whatsoever.

### Example 1

### Preparation of the polyolefin composition

The solid catalyst component used in polymerization is a Ziegler-Natta catalyst component supported on magnesium chloride, containing titanium and diisobutylphthalate as internal donor, prepared as follows.

An initial amount of microspheroidal MgCl₂·2.8C₂H₅OH was prepared according to the method described in Example 2 of USP 4,399,054 but operating at 3,000 rpm instead of 10,000. The so obtained adduct was then subjected to thermal dealcoholation at increasing temperatures from 30 to 130°C under nitrogen stream until the molar alcohol content per mol of Mg was 1.16.

Into a 1000 mL four-necked round flask, purged with nitrogen, 500 mL of TiCl₄ were introduced at 0°C. While stirring, 30 grams of the microspheroidal MgCl₂·1.16C₂H₅OH adduct (prepared as described above) were added. The temperature was raised to 120°C and kept at this value for 60 minutes. During the temperature increase, an amount of diisobutylphthalate was added such as to have a Mg/diisobutylphthalate molar ratio of 18. After 60 minutes the stirring was stopped, the liquid siphoned off and the treatment with TiCl₄ was repeated at 100°C for 1 hour in the presence of an amount of diisobutylphthalate such as to have a Mg/ diisobutylphthalate molar ratio of 27. After that time the stirring was stopped, the liquid siphoned off and the treatment with TiCl₄ was repeated at 100°C for 30 min. After sedimentation and siphoning at 85°C the solid was washed six times with anhydrous hexane (6 x 100 ml) at 60°C.

Before introduction into the polymerization reactors, the solid catalyst component described above was contacted at 30°C for 9 minutes with aluminum triethyl (TEAL) and dicyclopentyldimethoxysilane (DCPMS), in a TEAL/DCPMS weight ratio equal to about 15 and in such quantity that the TEAL/solid catalyst component weight ratio was equal to 4.

The catalyst system was then subjected to prepolymerization by maintaining it in suspension in liquid propylene at 50°C for about 75 minutes before introducing it into the first polymerization reactor.

The polymerization was carried out in continuous in a series of two gas-phase reactors equipped with devices to transfer the product from the first reactor to the second one.

Into the first gas phase polymerization reactor a polyethylene with 3.4 wt.% of propylene and 5.2 wt.% of butene-1 (component A) was produced by feeding in a continuous and constant flow the prepolymerized catalyst system, hydrogen (used as molecular weight regulator), ethylene and butene-1 in the gas state.

The polyethylene formed in the first reactor was continuously discharged and, after having been purged of unreacted monomers, was introduced, in a continuous flow, into the second gas phase reactor, together with quantitatively constant flows of hydrogen, ethylene and propylene, each in the gas state.

In the second reactor a copolymer of ethylene with propylene comprising 40 wt. % of propylene was produced (component B). Polymerization conditions, molar ratio of the reactants and composition of the copolymers obtained are shown in Table I.

The polymer particles exiting the second reactor, which constitute the not-yet stabilized polyolefin composition, were subjected to a steam treatment to remove the reactive monomers and volatile substances, and then dried.

Then the polyolefin composition was mixed with a stabilizing additive composition in a twin screw extruder Berstorff ZE 25 (length/diameter ratio of screws: 33) and extruded under nitrogen atmosphere in the following conditions:

| | |
|---|---|
| Rotation speed: | 250 rpm; |
| Extruder output: | 15 kg/hour; |
| Melt temperature: | 280-290 °C |

From the extruder it was discharged a stabilized polyolefin composition comprising the following additives:
- 0.1% by weight of Irganox® 1010;
- 0.1% by weight of Irgafos® 168;
- 0.04% by weight of DHT-4A (hydrotalcite).

Irganox® 1010 is 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, while Irgafos® 168 is tris(2,4-di-tert.-butylphenyl)phosphite.

The percent amounts are referred to the total weight of the polyolefin composition and stabilizing additive composition.

The properties of the present polyolefin composition, reported in Tables II and III, were obtained from measurements carried out on the composition discharged from the extruder.

**Table I**

| Example No. | | 1 |
|---|---|---|
| **1^{st} Reactor (component A)** | | |
| Temperature | °C | 75 |
| Pressure | barg | 20 |
| H2/C2- | mol. | 0.54 |
| C2-/(C2- + C3-) | mol. | 0.98 |
| C4-/(C4- + C2-) | mol. | 0.058 |
| Split | wt% | 65 |
| Xylene soluble (XS_{A}) | wt% | 5.2 |
| MFR of A) | g/10 min. | 7.3 |
| Density of A) | g/cm³ | 0.930 |
| C3- content of A) | wt% | 3.4 |
| C4- content of A) | wt% | 5.3 |

| **2^{nd} Reactor (component B)** | | |
|---|---|---|
| Temperature | °C | 65 |
| Pressure | barg | 20 |
| H2/C2- | mol. | 0.19 |
| H2/C3- | mol. | 0.15 |
| C2-/(C2- + C3-) | mol. | 0.45 |
| Split | wt% | 35 |
| C3- content of B) * | wt% | 40 |
| Xylene soluble of B) * (XS_{B}) | wt% | 90 |
| C3- content of A + B) | wt% | 14.5 |
| Xylene soluble of A+B) (XS) | wt% | 34.0 |
| Intrinsic Viscosity of A + B XSIV | dl/g | 2.55 |
| Tm of A) + B) | °C | 123.7 |
| ΔHm of A) + B) | J/gr | 87.4 |

| | | |
|---|---|---|
| Notes: C3- = propylene; C2- = ethylene; C4- = butene-1; split = amount of polymer produced in the concerned reactor. *Calculated values | | |

Mechanical properties measured on the polyolefin composition prepared in Example 1 are reported in Tables II and III below.

Table II reports the properties measured on injection molded and compression molded specimens, the latter being used for the Flexural Modulus measurement.

Table III reports the tensile properties measured on extruded sheets, compared (for illustrative and non-limiting purposes) with corresponding properties of Example 3 and 4 of WO 2014/025982, which was a blend of HDPE with 20 and 40 wt.% of flexible polypropylene (fPP), respectively.

**Table II**

| Example | | Ex. 1 |
|---|---|---|
| Density | g/cm³ | 0.9055 |
| MFR | g/10 min. | 2.0 |
| Flexural Modulus | MPa | 210 |
| Tensile Strength at Yield | MPa | 6.5 |
| Elongation at Yield | % | 32.8 |
| Tensile strength at break | MPa | 9.4 |
| Elongation at break | % | 550 |
| Vicat | °C | 78.8 |
| HdT (@ 0.455 MPa) | °C | 38.9 |

**Table III**

| Example | | Ex. 1 | Ex. 4 of WO 2014/025982 | Ex. 3 of WO 2014/025982 |
|---|---|---|---|---|
| Tensile Strength at Yield (MD) | MPa | 7.9 | 14.2 | 18.3 |
| Elongation at Yield (MD) | % | 26.6 | 19.7 | 13.6 |
| Tensile strength at break (MD) | MPa | 13.6 | 29.3 | 30.2 |
| Elongation at break (MD) | % | 895 | 805 | 739 |
| Tensile Strength at Yield (TD) | MPa | 7.7 | 13.1 | 18.1 |
| Elongation at Yield (TD) | % | 25.1 | 18.8 | 13.8 |
| Tensile strength at break (TD) | MPa | 13.3 | 23.2 | 16.5 |
| Elongation at break (TD) | % | 1000 | 795 | 765 |

| | | | | |
|---|---|---|---|---|
| MD = Machine Direction TD = Transverse Direction | | | | |

Table IV below compares the flexural modulus of Example 1 with that of Examples 3, 4, 8 and 9 of WO 2014/025982.

**Table IV**

| | Ex. 1 | WO 2014/025982 | | | |
|---|---|---|---|---|---|
| | | Ex. 3 | Ex. 4 | Ex. 8 | Ex. 9 |
| Flexural Modulus (MPa) | 210 | 785 | 410 | 480 | 330 |

It is to be noted that the flexural modulus of Ex. 4 of WO 2014/025982 was determined on a blend of HDPE with 40 wt.% of fPP, the flexural modulus of Ex. 8 on a blend of MDPE with 20 wt.% of fPP, and the flexural modulus of Ex. 9 on a blend of MDPE with 40 wt.% of fPP.

In various embodiments, the polyolefin composition of the present disclosure has a flexural modulus ranging from 90 MPa to less than 260 MPa; alternatively from 90 MPa to 230 MPa. In various embodiments, the polyolefin composition of the present disclosure has a density ranging from 0.890 g/cm³ to 0.930 g/cm³; alternatively from 0.895 g/cm³ to 0.920 g/cm³. In various embodiments, the polyolefin composition of the present disclosure has a melt flow rate ranging from 1 g/10 min. to 10 g/10 min.; alternatively from 1 g/10 min. to 5 g/10 min. In various embodiments, the polyolefin composition of the present disclosure has a tensile strength at yield ranging from 2 MPa to 10 MPa; alternatively from 3 MPa to 9 MPa. In various embodiments, the polyolefin composition of the present disclosure has a elongation at yield ranging from 20% to 40%; alternatively from 30% to 35%. In various embodiments, the polyolefin composition of the present disclosure has a tensile strength at break ranging from 5 MPa to 15 MPa; alternatively from 6 MPa to 13 MPa. In various embodiments, the polyolefin composition of the present disclosure has a elongation at break ranging from 300% to 1000%; alternatively from 400% to 800%. In various embodiments, the polyolefin composition of the present disclosure has a Vicat ranging from 65 °C to 100 °C; alternatively from 70 °C to 90 °C. In various embodiments, the polyolefin composition of the present disclosure has a HdT at 0.455 MPa ranging from 30 °C to 50 °C; alternatively from 35 °C to 45 °C.

The data above show that the present polyolefin composition (Example 1) has a substantially lower, thus improved, flexural modulus than the compositions disclosed by WO 2014/025982. Also, the composition has improved elongation properties than the compositions disclosed by WO 2014/025982.

## Claims

1. Polyolefin composition comprising:
A) from 60 to 75 wt.% of a polyethylene having a density of 0.920-0.940 g/cm³ and a fraction soluble in xylene (XS_{A}) of less than 10 wt.%, said polyethylene comprising ethylene and one or more comonomers selected from α-olefins having formula CH₂=CHR, wherein R is an alkyl radical, linear or branched, having from 1 to 10 carbon atoms; and
B) from 25 to 40 wt.% of a copolymer of ethylene with one or more comonomers selected from α-olefins having formula HC₂=CHR^{I}, where R^{I} is an alkyl radical, linear or branched, having from 1 to 8 carbon atoms, comprising from 50 to 70 wt.% of ethylene and having a fraction soluble in xylene (XS_{B}) of at least 50 wt.%;
said composition having a flexural modulus of less than 260 MPa as measured according to ISO 178.

2. Polyolefin composition according to claim 1, wherein the amount of said α-olefin comonomer in polyethylene component A) is from 4 to 15 wt.%, alternatively from 6 to 12 wt.%.

3. Polyolefin composition according to anyone of claims 1-2, wherein said α-olefin comonomer in polyethylene component A) is propylene or butene-1 or a mixture of propylene and butene-1.

4. Polyolefin composition according to claim 3, wherein polyethylene component A) comprises from 2 to 5 wt.% of propylene and from 4 to 7 wt.% of butene-1.

5. Polyolefin composition according to anyone of claims 1-4, wherein the polyethylene component A) has a solubility in xylene (XS_{A}) at 25°C of less than 8 wt.%.

6. Polyolefin composition according to anyone of claims 1-5, wherein the ethylene copolymer of component B) comprises from 35 to 45 wt.% of propylene.

7. Polyolefin composition according to anyone of claims 1-6, wherein the ethylene copolymer of component B) has a fraction soluble in xylene (XS_{B}) of from 70 to 95wt.%.

8. Polyolefin composition according to anyone of claims 1-7, having an ethylene content, determined on the total amount of A) + B), of 70% - 95% by weight, alternatively of 75 - 90% by weight.

9. Polyolefin composition according to anyone of claims 1-8, comprising from 60 to 70 wt.% of Component A) and from 30 to 40 wt.% of Component B).

10. Polymerization process for producing the polyolefin composition of claim 1, comprising at least two sequential stages, wherein components A) and B) are produced in separate subsequent stages, said polymerization being carried out in each stage, except the first stage, in the presence of the polymer formed and the catalyst used in the preceding stage.

11. Polyolefin composition comprising the polyolefin composition according to anyone of claims 1-9 and at least 50% by weight of one or more additional polyolefin.

12. Polyolefin composition according to claim 11, wherein the additional polyolefin is selected from propylene homoploymers and propylene copolymers.

13. Shaped articles comprising the polyolefin composition of anyone of claims 1-9 and 11-12.

14. Shaped articles according to claim 13, selected from sheets, roofing membranes and geomembranes.

## Patentansprüche

1. Polyolefinzusammensetzung, umfassend:
A) 60 bis 75 Gew.% eines Polyethylens mit einer Dichte von 0,920 bis 0,940 g/cm³ und einer in Xylol bei Raumtemperatur löslichen Fraktion (XS_{A}) von weniger als 10 Gew.%, wobei das Polyethylen Ethylen und ein oder mehrere Comonomere ausgewählt aus α-Olefinen mit der Formel CH₂=CHR umfasst, wobei R ein linearer oder verzweigter Alkylrest mit 1 bis 10 Kohlenstoffatomen ist; und
B) 25 bis 40 Gew.% eines Copolymers von Ethylen mit einem oder mehreren Comonomeren ausgewählt aus α-Olefinen mit der Formel H₂C=CHR^{I}, wobei R^{I} ein linearer oder verzweigter Alkylrest mit 1 bis 8 Kohlenstoffatomen ist, welches 50 bis 70 Gew.% Ethylen umfasst und eine in Xylol lösliche Fraktion (XS_{B}) von mindestens 50 Gew.% aufweist;
wobei die Zusammensetzung einen Biegemodul von weniger als 260 MPa aufweist, gemessen gemäß ISO 178.

2. Polyolefinzusammensetzung nach Anspruch 1, wobei die Menge des α-Olefincomonomers in der Polyethylenkomponente A) 4 bis 15 Gew.%, alternativ 6 bis 12 Gew.% beträgt.

3. Polyolefinzusammensetzung nach einem der Ansprüche 1 bis 2, wobei das α-Olefincomonomer in der Polyethylenkomponente A) Propylen oder Buten-1 oder eine Mischung von Propylen und Buten-1 ist.

4. Polyolefinzusammensetzung nach Anspruch 3, wobei Polyethylenkomponente A) 2 bis 5 Gew.% Propylen und 4 bis 7 Gew.% Buten-1 umfasst.

5. Polyolefinzusammensetzung nach einem der Ansprüche 1 bis 4, wobei die Polyethylenkomponente A) eine Löslichkeit in Xylol (XS_{A}) bei 25 °C von weniger als 8 Gew.% aufweist.

6. Polyolefinzusammensetzung nach einem der Ansprüche 1 bis 5, wobei das Ethylencopolymer von Komponente B) 35 bis 45 Gew.% Propylen umfasst.

7. Polyolefinzusammensetzung nach einem der Ansprüche 1 bis 6, wobei das Ethylencopolymer von Komponente B) eine in Xylol lösliche Fraktion (XS_{B}) von 70 bis 95 Gew.% aufweist.

8. Polyolefinzusammensetzung nach einem der Ansprüche 1 bis 7 mit einem bezogen auf die Gesamtmenge von A) + B) ermittelten Ethylengehalt von 70 Gew.% bis 95 Gew.%, alternativ 75 bis 90 Gew.%.

9. Polyolefinzusammensetzung nach einem der Ansprüche 1 bis 8, umfassend 60 bis 70 Gew.% von Komponente A) und 30 bis 40 Gew.% von Komponente B).

10. Polymerisationsverfahren zur Produktion der Polyolefinzusammensetzung nach Anspruch 1, umfassend mindestens zwei aufeinander folgende Stufen, wobei Komponenten A) und B) in separaten Folgestufen produziert werden, wobei die Polymerisation in jeder Stufe außer der ersten Stufe in Gegenwart des in der vorhergehenden Stufe gebildeten Polymers und verwendeten Katalysators durchgeführt wird.

11. Polyolefinzusammensetzung, umfassend die Polyolefinzusammensetzung gemäß einem der Ansprüche 1 bis 9 und mindestens 50 Gew.% von einem oder mehreren zusätzlichen Polyolefin(en).

12. Polyolefinzusammensetzung nach Anspruch 11, wobei das zusätzliche Polyolefin ausgewählt ist aus Propylenhomopolymeren und Propylencopolymeren.

13. Formartikel, umfassend die Polyolefinzusammensetzung gemäß einem der Ansprüche 1 bis 9 und 11 bis 12.

14. Formartikel nach Anspruch 13 ausgewählt aus Lagen, Dachmembranen und Geomembranen.

## Revendications

1. Composition de polyoléfine comprenant :
A) 60 à 75% en poids d'un polyéthylène possédant une densité de 0,920 à 0,940 g/cm³ et une fraction soluble dans le xylène (XSA) inférieure à 10% en poids, ledit polyéthylène comprenant de l'éthylène et un ou plusieurs comonomères choisis parmi des α-oléfines présentant la formule CH₂=CHR, R représentant un radical alkyle, linéaire ou ramifié, comprenant 1 à 10 atomes de carbone ; et
B) 25 à 40% en poids d'un copolymère d'éthylène avec un ou plusieurs comonomères choisis parmi les α-oléfines de formule HC₂=CHR, R^{I} représentant un radical alkyle, linéaire ou ramifié, comprenant 1 à 8 atomes de carbone, comprenant 50 à 70% en poids d'éthylène et possédant une fraction soluble dans le xylène (XS_{B}) d'au moins 50% en poids ;
ladite composition possédant un module de flexion inférieur à 260 MPa, tel que mesuré selon la norme ISO 178.

2. Composition de polyoléfine selon la revendication 1, la quantité dudit comonomère de type α-oléfine dans le constituant à base de polyéthylène A) étant de 4 à 15% en poids, en variante de 6 à 12% en poids.

3. Composition de polyoléfine selon l'une quelconque des revendications 1 à 2, ledit comonomère de type α-oléfine dans le constituant à base de polyéthylène A) étant le propylène ou le butène-1 ou un mélange de propylène et de butène-1.

4. Composition de polyoléfine selon la revendication 3, le constituant à base de polyéthylène A) comprenant 2 à 5% en poids de propylène et 4 à 7% en poids de butène-1.

5. Composition de polyoléfine selon l'une quelconque des revendications 1 à 4, le constituant à base de polyéthylène A) possédant une solubilité dans le xylène (XS_{A}) à 25°C inférieure à 8% en poids.

6. Composition de polyoléfine selon l'une quelconque des revendications 1 à 5, le copolymère d'éthylène du constituant B) comprenant 35 à 45% en poids de propylène.

7. Composition de polyoléfine selon l'une quelconque des revendications 1 à 6, le copolymère d'éthylène du constituant B) possédant une fraction soluble dans le xylène (XS_{B}) de 70 à 95% en poids.

8. Composition de polyoléfine selon l'une quelconque des revendications 1 à 7, présentant une teneur en éthylène, déterminée sur la base de la quantité totale de A) + B), de 70% à 95% en poids, en variante de 75 à 90% en poids.

9. Composition de polyoléfine selon l'une quelconque des revendications 1 à 8, comprenant 60 à 70% en poids du constituant A) et 30 à 40% en poids du constituant B).

10. Procédé de polymérisation pour la production de la composition de polyoléfine selon la revendication 1, comprenant au moins deux étapes séquentielles, les constituants A) et B) étant produits dans des étapes subséquentes distinctes, ladite polymérisation étant réalisée à chaque étape, à l'exception de la première étape, en présence du polymère formé et du catalyseur utilisé dans l'étape précédente.

11. Composition de polyoléfine comprenant la composition de polyoléfine selon l'une quelconque des revendications 1 à 9 et au moins 50% en poids d'une ou de plusieurs polyoléfines supplémentaires.

12. Composition de polyoléfine selon la revendication 11, la polyoléfine supplémentaire étant choisie parmi les homopolymères de propylène et les copolymères de propylène.

13. Articles façonnés comprenant la composition de polyoléfine selon l'une quelconque des revendications 1 à 9 et 11 à 12.

14. Articles façonnés selon la revendication 13, choisis parmi les feuilles, les membranes de toiture et les géomembranes.
